Europäisches Patentamt

European Patent Office

Office européen des brevets

(19)

(11) Numéro de publication: **0 258 949 B1**

## FASCICULE DE BREVET EUROPEEN

(12)

(45) Date de publication de fascicule du brevet: **11.11.92**   (51) Int. Cl.⁵: **H04N 3/233**

(21) Numéro de dépôt: **87201650.6**

(22) Date de dépôt: **31.08.87**

(54) **Circuit de balayage lignes avec correction dynamique de S.**

(30) Priorité: **02.09.86 FR 8612319**

(43) Date de publication de la demande:
**09.03.88 Bulletin 88/10**

(45) Mention de la délivrance du brevet:
**11.11.92 Bulletin 92/46**

(84) Etats contractants désignés:
**DE FR GB IT**

(56) Documents cités:
**FR-A- 2 043 788**
**US-A- 4 423 358**

**PATENT ABSTRACTS OF JAPAN, vol. 9, no.
131 (E-319) [1854], 6. juin 1985; & JP-A-60 16
070 (SONY K.K.) 26-01-1985**

(73) Titulaire: **PHILIPS ELECTRONIOUE GRAND PU-
BLIC**
**51, Rue Carnot**
**F-92150 Suresnes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT**

(72) Inventeur: **Decraemer, Alain**
**SOCIETE CIVILE S.P.I.D 209, rue de l'Université**
**F-75007 Paris(FR)**

(74) Mandataire: **Caron, Jean et al**
**Société Civile S.P.I.D. 156, Boulevard Haussmann**
**F-75008 Paris(FR)**

Rank Xerox (UK) Business Services

EP 0 258 949 B1

## Description

L'invention concerne un circuit de balayage de ligne pour un tube de visualisation d'image à déviation magnétique de faisceau, muni d'un assemblage fait d'une inductance de déviation en série avec un condensateur dit "de S", et muni de moyens commutateurs qui sont connectés aux bornes d'une source de tension via un enroulement d'un transformateur dit "de lignes" et qui sont conducteurs pendant une partie de la période de ligne dit temps d'aller pour appliquer à l'inductance de déviation en série avec le condensateur de S une tension pratiquement constante et sont bloqués pendant le reste de la période dit temps de retour durant lequel l'inductance de déviation forme un circuit résonant avec un condensateur de retour placée en parallèle sur les moyens commutateurs.

Du fait que l'angle entre le faisceau cathodique et l'écran du tube varie au cours du balayage, il faut corriger la vitesse de balayage en fonction des coordonnées du point balayé : c'est la correction bien connue dite "en S" parce qu elle donne une forme de "S" à la représentation du courant en dents de scie dans le déviateur. Elle est obtenue au moyen de l'assemblage d'un condensateur "de S" en série avec l'inductance de déviation ou déviateur. Cet assemblage constitue un circuit oscillant introduisant une composante sinusoïdale qui déforme le courant principal et lui donne une forme de "S" pendant le temps d'aller, temps pendant lequel une tension constante est appliquée au groupe déviateur-condensateur en série.

Le circuit de base requiert encore un certain nombre de corrections destinées à corriger les imperfections géométriques de l'ensemble tube à rayons cathodiques / déviateur. En particulier, une déformation connue dite "en coussin" demande une correction dite "Est-Ouest" qui provoque une variation d'amplitude horizontale dynamique au cours du balayage d'une trame.

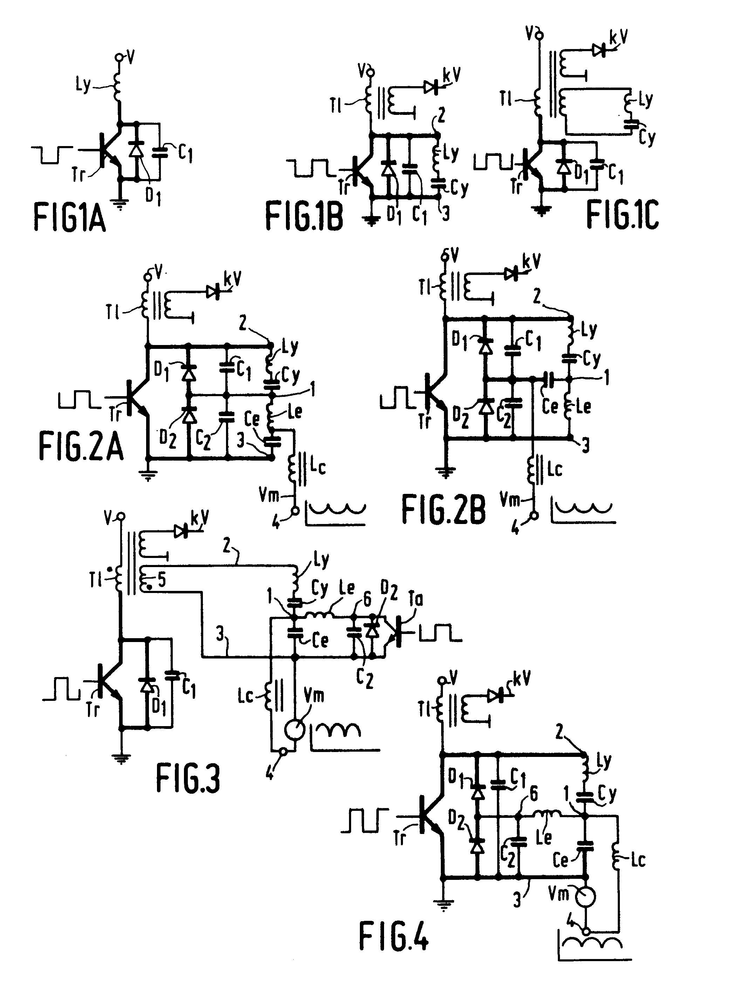

De nombreux circuits ont été proposés pour corriger la déformation en coussin. Le circuit le plus employé actuellement est celui appelé "modulateur à diodes", qui est décrit entre autres dans le brevet français FR-A-2 216 722, et plus récemment dans le document : "Philips electronic components and materials" Technical publication n° 201, intitulé "Drive circuits for 45 AX". Le problème résolu par ce circuit est de pouvoir faire varier dynamiquement l'amplitude du balayage lignes sans faire varier la très haute tension ("THT") qui est engendrée, dans la plupart des cas, à partir de l'étage de balayage lignes. Dans ce circuit, un second groupe inductance + condensateur est placé en série avec le premier et une tension variable à fréquence de trame est appliquée aux bornes du condensateur de ce second groupe. Ce circuit requiert des aménagements avec les nouveaux tubes plats et à coins carrés ; en effet, ces tubes réclament une correction de "S" plus prononcée que les anciens tubes, et plus dynamique c'est-à-dire variant au cours d'une trame, alors qu'ils réclament moins de correction de coussin que les tubes anciens. Dans les circuits des documents cités, l'application de la tension variable à fréquence de trame engendre essentiellement une variation de l'amplitude de balayage. Une variante, décrite par exemple avec les figures 3 à 5 du dernier document cité, permet d'introduire en outre une correction dynamique de "S" (en langue anglaise : "inner pincushion distortion") associée à la correction d'amplitude.

Comme dans ce circuit, les moyens commutateurs du circuit selon l'invention sont, dans une première variante, constitués par un commutateur proprement dit en parallèle avec deux diodes en série connectées pour un sens de courant opposé à celui du commutateur, ledit assemblage est connecté d'une part au point commun des moyens commutateurs et de l'enroulement du transformateur et d'autre part au point commun des deux diodes en série, et le circuit est également muni d'un générateur de tension en forme de paraboles à fréquence de trame.

On souhaite obtenir maintenant une plus faible variation d'amplitude, associée à une plus forte variation de la correction en "S". Un moyen connu pour obtenir cet effet est d'ajouter un second condensateur de "S" en parallèle avec le premier et de commuter ce second condensateur au moyen d'un circuit de conmutation électronique qui branche ou débranche ce condensateur selon un rapport cyclique qui varie au cours d'une trame. Ce condensateur a peu d'influence sur l'amplitude. Un tel circuit est décrit par le document EP-A- 0 146 345, selon lequel un condensateur ainsi commuté est ajouté à un classique circuit modulateur à diodes.

Cette technique a l'inconvénient de requérir un circuit supplémentaire pour définir les instants de commutation du condensateur supplémentaire, dont en outre le temps de connexion doit être assez finement découpé pour éviter l'introduction de distorsions dans une ligne : on ne peut se contenter de le connecter une seule fois au cours d'une ligne car cela introduirait une déformation visible dans la linéarité de ligne.

L'invention se propose de fournir un circuit particulièrement simple qui procure la correction désirée sans introduire aucune déformation de ligne et sans faire varier la "THT".

A cet effet, le circuit selon l'invention est remarquable en ce qu'une inductance auxiliaire (Le) est insérée entre ledit assemblage et le point commun aux deux diodes, un second condensateur (Ce) de S est placé de façon à former une maille avec la seconde diode et l'inductance auxiliaire, et la tension du générateur de tension en forme de paraboles à fréquence de trame est appliquée au second condensateur de S (Ce).

Le mode d'action avec le second condensateur de S est tout à fait différent de celui du modulateur à diodes, ainsi qu'il sera expliqué lors de la description détaillée des exemples de réalisation de l'invention.

Pour éliminer des effets nuisibles pendant le temps de retour, ce circuit est avantageusement muni d'un second condensateur de retour connecté de manière à constituer un circuit oscillant avec l'inductance auxiliaire.

Selon une seconde variante de réalisation pour laquelle on désire que le déviateur soit isolé galvaniquement des moyens commutateurs, seconde variante dans laquelle les moyens commutateurs sont faits d'un commutateur proprement dit en parallèle avec une diode connectée pour un sens de courant opposé à celui du commutateur, et dans laquelle ledit assemblage est connecté aux bornes d'un autre enroulement du transformateur de lignes, le circuit selon l'invention est remarquable en ce qu'un second condensateur de S est branché en série avec le premier et une source de courant en dents de scie est branchée aux bornes de ce second condensateur de S pour y injecter un courant en dents de scie à fréquence de ligne, dont une partie traverse l'inductance de déviation, et le circuit est également muni d'un générateur de tension en forme de paraboles à fréquence de trame dont la tension est appliquée au second condensateur de S.

Cette variante est moins économique que la première, parce que des moyens spécifiques sont utilisés pour appliquer au condensateur auxiliaire le courant en dents de scie, alors que dans la variante précédente, ce sont les moyens commutateurs de déviation qui servent à fournir ce courant, moyennant la seule adjonction d'une inductance auxiliaire judicieusement placée.

La source de courant en dents de scie est avantageusement réalisée au moyen d'une inductance auxiliaire connectée en série avec un ensemble fait d'un élément interrupteur, qui est commandé par un signal en créneaux à fréquence de ligne, en parallèle avec une diode et un condensateur.

La description qui va suivre, en regard des dessins annexés décrivant des exemples non limitatifs, fera bien comprendre comment l'invention peut être réalisée.

Les figures 1A à 2B illustrent différentes variantes de circuits de l'état de la technique.

Les figures 3 et 4 illustrent chacune une variante d'un circuit selon l'invention.

La figure 1A est un schéma de montage utilisé dans pratiquement tous les circuits de balayage lignes des récepteurs de télévision. Il comprend essentiellement une inductance de déviation, ou déviateur, Ly, branchée entre une borne de tension d'alimentation V, et la masse (c'est-à-dire l'autre borne de la source d'alimentation) via un interrupteur électronique représenté ici par un transistor Tr. Lorsque le transistor Tr est passant, la tension constante V est appliquée au déviateur. Cette tension reste appliquée pendant une partie du temps, dite temps d'aller, pendant lequel le courant dans l'inductance Ly varie donc linéairement. Lorsque le transistor est bloqué à la fin de cette période, le temps dit de retour commence. Le condensateur C1, branché en parallèle avec le transistor Tr, intervient alors. Il forme avec l'inductance Ly un circuit oscillant grâce auquel, après environ une demi-période d'oscillation, le courant est inversé dans l'inductance Ly. Alors intervient la diode D1, branchée en parallèle sur le transistor Tr et dont le sens de conduction, opposé à celui du transistor, correspond au courant dans l'inductance Ly à cet instant. Lorsque la diode D1 devient conductrice, la tension constante V est à nouveau appliquée au déviateur et un nouveau temps d'aller commence.

Ce circuit fondamental ne comporte aucune correction. Pour assurer la correction en "S" citée plus haut, on peut faire varier la tension appliquée au déviateur pendant le temps d'aller. Ceci pourrait être obtenu en modulant la tension V. En pratique, un moyen simple est employé consistant à introduire un condensateur en série avec le déviateur, l'ensemble de ces éléments en série étant ci-après nommé : "groupe LC". Comme le condensateur couperait le chemin du courant continu fourni par la source V, on a recours à l'un des deux schémas illustrés aux figures 1B et 1C où les éléments correspondants portent les mêmes références que dans la figure 1A.

Dans la figure 1B, le groupe LC (Ly, Cy) est alimenté par la source V via une inductance d'arrêt Tℓ et ce groupe est placé en parallèle avec les éléments Tr, C1, D1 : en considérant que le condensateur Cy constitue une source de tension, on retrouve un schéma semblable à celui de la figure 1A. Ainsi, une tension constante nulle (en négligeant la tension de saturation du transistor et la chute de tension directe de la diode) est appliqué aux bornes du groupe LC pendant l'aller.

La variante de la figure 1C est employée lorsque l'on désire un isolement galvanique entre le déviateur et le reste du circuit. Elle correspond au circuit de la figure 1A dans lequel on aurait introduit un transformateur Tℓ pour alimenter le déviateur Ly, et ajouté un condensateur Cy en série avec Ly.

L'inductance d'arrêt ou le transformateur Tℓ comportent en pratique au moins un autre enroulement suggéré avec la référence kV sur les figures, qui alimente notamment le redresseur de très haute tension nécessaire pour l'accélération du faisceau cathodique.

Le circuit de la figure 3 est un circuit selon l'invention dans une première variante pour laquelle on souhaite un isolement galvanique entre le circuit de commande et le déviateur, obtenu au moyen du transformateur de lignes Tℓ. Ce circuit utilise le schéma de base représenté sur la figure 1C et les éléments qui jouent le même rôle dans les deux figures portent les mêmes références. Dans le schéma de la figure 3, un deuxième condensateur Ce est inséré dans le groupe LC en série avec le premier condensateur Cy et au point commun (1) des deux condensateurs est injecté un courant en dents de scie à fréquence lignes, d'amplitude variant à fréquence trames. Ce courant est obtenu en plaçant en parallèle avec le condensateur Ce un circuit constitué d'une inductance Le en série avec un système interrupteur constitué d'un transistor interrupteur Ta, en parallèle avec un condensateur C2 et avec une diode D2 dont le sens de conduction est opposé à celui du transistor. En parallèle avec le condensateur Ce est également placé un circuit constitué par une inductance d'arrêt Lc, en série avec une source de tension Vm variable à fréquence trames. La tension moyenne de charge du condensateur Ce est donc égale à $V_m$. Le transistor Ta étant commandé par des signaux à fréquence lignes, l'ensemble des éléments Le, D2, C2, Ta, fonctionne de la même manière que l'ensemble des éléments respectivement Ly, D1, C1, Tr, de la figure 1A, c'est-à-dire qu'un courant en dents de scie est engendré dans l'inductance Le, courant dont l'amplitude dépend de $V_m$. En outre, le circuit oscillant constitué par les éléments Le et C2 doit résonner pratiquement sur la même fréquence que le circuit résonnant constitué par les éléments Ly et C1 via le transformateur Tℓ. La tension moyenne aux bornes du condensateur Ce varie donc avec $V_m$ au cours d'une trame, mais au premier degré, ceci n'a pas d'influence sur l'amplitude du courant dans le déviateur Ly puisque l'ensemble des deux condensateurs Cy + Ce en série est toujours en court-circuit du point de vue du courant continu via l'inductance Ly et l'enroulement secondaire de Tℓ, donc chargé à une tension moyenne nulle (le condensateur Cy se charge donc à une tension moyenne variable égale et opposée à celle du condensateur Ce). Une tension constante (positive pour la connexion 3 par rapport à la connexion 2) est appliquée, pendant l'aller, par l'enroulement 5 du transformateur Tℓ au groupe Ly, Cy, Ce. Par contre, le courant en dents de scie dans l'inductance Le provoque aux bornes du condensateur Ce une tension de forme parabolique correspondant à l'intégrale des courants qui le traversent et dont on sait qu'elle procure une correction en "S". Cette tension a la forme d'arches de paraboles qui durent chacune une durée de ligne et assurent une correction en "S", et ne doit pas être confondue avec les paraboles de la tension Vm, qui durent une durée de trame et assurent éventuellement une très légère correction de coussin et la variation de l'efficacité de la correction en "S". On constate que le courant qui traverse le condensateur Ce a une composante d'amplitude constante, fournie par le courant du déviateur qui assure une certaine correction en "S" fixe, et une composante d'amplitude variable au cours d'une trame, fournie par le courant dans l'inductance auxiliaire Le, qui assure donc une correction en "S" variable au cours d'une trame.

On peut aussi brancher l'enroulement 5 de façon à appliquer une tension positive sur la connexion 2 par rapport à la connexion 3. Dans ce cas le fonctionnement est un peu différent et les arches de parabole de Vm doivent avoir leur concavité tournée vers le haut, la valeur moyenne de Vm restant néanmoins positive par rapport à la connexion 3.

Une autre variante du circuit selon l'invention est illustrée à la figure 4. Cette variante correspond au schéma de base connu de la figure 1B. Par rapport au schéma connu, un second condensateur Ce est inséré en série avec le groupe Ly/Cy, la diode D1 est remplacée par deux diodes D1, D2, en série, et une inductance auxiliaire Le est conectée entre le point commun des deux condensateurs Cy, Ce et le point commun des deux diodes D1, D2, et enfin un deuxième condensateur de retour C2 est placé en parallèle avec la diode D2. Le condensateur C1 est toujours en parallèle sur le transistor Tr. Les deux circuits oscillants Ly,C1 et Le,C2 sont calculés pour avoir pratiquement la même période. Cette variante est basée sur le même principe de correction en "S" variable que celle de la figure 3, mais le rôle du transistor auxiliaire Ta de la figure 3 est ici joué par le transistor principal Tr lui-même.

Le schéma de la figure 4 peut rappeler celui du modulateur à diodes de l'art antérieur illustré par les figures 2A et 2B. Il est donc utile de revenir sur ces schémas connus pour montrer combien le nouveau schéma en diffère dans son principe et ses effets.

Lorsqu'il s'agit de moduler à fréquence de trame l'amplitude de la déviation, c'est-à-dire l'amplitude du courant dans le déviateur, pour corriger la distorsion en coussin mentionnée plus haut, on pourrait imaginer de moduler la tension d'alimentation V. Mais ce procédé entraînerait une variation concomitante de la tension aux bornes du bobinage Tℓ et donc de toutes les tensions qu'il alimente par ailleurs : une solution est apportée par le montage connu de la figure 2A, dit "modulateur à diodes". Ce montage comporte les éléments de la figure 1B avec les mêmes références, mais en série avec l'ensemble des trois éléments D1, C1, Ly/Cy, est placé un autre ensemble de même constitution comportant aussi trois éléments respectivement correspondants D2, C2, Le/Ce. En outre, une inductance d'arrêt Lc relie le point commun des éléments Le et Ce à une borne 4 d'une source de tension. Pendant la phase d'aller, une tension constante (pratiquement nulle) est appliquée aux bornes du groupe Ly/Cy soit par le transistor Tr en série avec la diode D2, soit par la diode D1, selon le sens du courant dans le groupe Ly/Cy. De la même manière, une tension pratiquement nulle est appliquée au deuxième groupe Le/Ce, soit via D1 et Tr, soit via D2. Les connexions qui sont ainsi pratiquement mises en court-circuit pendant le temps d'aller sont indiquées par des lignes épaisses sur les figures.

Considérant le circuit du point de vue du courant continu, le transistor étant bloqué, on constate que les deux condensateurs Ce + Cy en série sont au total chargés en moyenne à la tension V. Lorsqu'on applique une tension Vm à la borne 4, la tension de charge du condensateur Ce est égale à Vm, et celle du condensateur Cy est alors de V - Vm. La tension aux bornes de ce dernier jouant alors le rôle de tension d'alimentation, il en résulte que cette tension diminue lorsque Vm augmente et que l'amplitude de déviation diminue ; mais la surtension aux bornes de Tℓ, qui est la somme de celle des deux groupes en série, reste constante. La correction de "S" ne varie pratiquement pas (le groupe Ly/Cy étant court-circuité par le trajet en trait épais, seul Cy intervient pour l'effet de S).

Avec le schéma de la figure 2B, une amélioration est obtenue en ce sens que la correction en "S" varie avec l'amplitude du balayage. En effet, ici, du point de vue du courant continu, le condensateur Cy est toujours chargé en moyenne à la valeur V, et le condensateur Ce est chargé à la valeur Vm. (Avec les schémas représentés aux figures 2 à 4, Vm doit toujours être positive, faute de quoi elle serait court-circuitée par la diode D2). Lorsque, lors de l'aller, les éléments semiconducteurs Tr, D1, D2 mettent pratiquement en court-circuit toutes les connexions indiquées en trait épais sur la figure, les condensateurs Ce et Cy se trouvent en série, mais ils sont chargés en sens inverse, donc une tension V - Vm est appliquée au déflecteur Ly, comme dans le cas de la figure 2A, et engendre donc le même courant dans le déflecteur Ly, avec la même relation entre Vm et l'amplitude de déviation. L'inductance Le voit ici encore à ses bornes une tension Vm, mais maintenant, le condensateur Ce est traversé par la différence des courants de l'inductance Ly et de l'inductance Le. Pour augmenter l'amplitude de lignes, il faut diminuer Vm au milieu de la déviation de trames : ce qui explique le sens des paraboles dessinées à côté du point 4. En diminuant Vm on diminue le courant de l'inductance Le, et comme celui est soustrait à celui de l'inductance Ly dans le condensateur Ce, on augmente donc le courant dans ce dernier au milieu d'une trame : ce qui accentue la correction en "S", ainsi qu'il est désiré. Toutefois, il n'est pas possible d'atteindre de fortes valeurs de correction dynamique de "S" avec de faibles valeurs de correction d'amplitude puisque les deux corrections sont liées. En outre, ce circuit présente un inconvénient en ce que le courant dans l'inductance Le peut temporairement excéder celui dans l'inductance Ly, ce qui entraîne le blocage de la diode D2, si cela arrive pendant la première phase de l'aller où le transistor n'est pas encore passant. Le document cité plus haut, intitulé "Drive circuits for 45 AX" indique des moyens pour parer à cet inconvénient, mais ils conduisent à une complication du circuit.

Dans le schéma du circuit selon l'invention (figure 4), les deux condensateurs Cy et Ce sont chargés en série à la tension moyenne V, comme dans le circuit connu de la figure 2A, mais, lors de l'aller, le circuit en trait épais court-circuite l'ensemble du bloc Ly, Cy, Ce, donc le déviateur est "alimenté" par les condensateurs Cy + Ce en série, dont la charge totale est toujours égale à V. L'amplitude ne varie donc pas, au premier degré, avec Vm. La tension de charge du condensateur Ce, en moyenne égale à Vm, est appliquée pendant l'aller à l'inductance Le, et y fait passer un courant en dents de scie proportionnel à Vm ; ce courant s'ajoutant à celui de l'inductance Ly dans le condensateur Ce augmente la correction en "S" dont l'efficacité dépend donc directement de Vm. Il y a donc une différence essentielle en ce qui concerne l'effet produit par le montage selon l'invention comparé aux modulateurs à diodes : la correction en "S" est réglable à volonté par Vm alors que, en principe, il n'y a pas de correction de coussin.

En outre, le courant traversant la diode D2 du circuit selon la figure 4 est le courant dans l'inductance Le, alors que, dans le montage connu de la figure 2B, le courant de la diode D2 était celui de l'inductance Ly moins celui de l'inductance Le. L'inconvénient du montage connu mentionné plus haut, dû au blocage possible de la diode D2, n'existe donc pas dans le montage de l'invention.

La différence essentielle entre le mode d'action du circuit de l'art antérieur et celui du circuit de l'invention est en outre mise en évidence par le fait que la variation parabolique de tension à fréquence trames de Vm est de sens opposé entre les figures 2A et 2B d'une part (art antérieur), et les figures 3 et 4 d'autre part (invention). Dans les circuits selon l'invention, une augmentation de Vm durant la trame augmente l'effet de "S" et est donc nécessaire au milieu de la déviation de trame. En principe, il n'y a pas de variation d'amplitude lignes ; cependant, si l'on augmente Vm, le courant croît dans les éléments Le et Ce, et l'amplitude de la parabole de tension à fréquence lignes induite aux bornes du condensateur Ce par le courant lignes en dents de scie croît également. On peut démontrer que ceci a pour effet d'augmenter très légèrement la tension moyenne aux bornes du condensateur Ce, calculée pendant le temps d'aller seul. Il en résulte une très légère augmentation de l'amplitude de déviation, qui est un effet secondaire de la correction en "S" et tout à fait distinct des variations d'amplitude dûes à une différence de tension par soustraction de Vm à V dans le cas des figures 2A, 2B. C'est en référence à cet effet secondaire qu'il a été mentionné plus haut, à plusieurs reprises, une absence de variation d'amplitude "au premier degré". On peut donc obtenir, avec le circuit selon l'invention, une légère correction de coussin, et une correction de "S" forte et réglable.

Des valeurs de composants ayant donné de bons résultats sont les suivantes, dans le cas de la figure 4 :

| C1 = 9,1 nF | Le = 1,2 mH | Ce = 0.54µF |
| C2 = 130 nF | Ly = 1,9 mH | Cy = 1,2 µF |

la tension d'alimentation étant de 140 V et la tension Vm présentant des arches de paraboles d'une amplitude d'environ 50 V.

On n'a pas représenté, pour simplifier la figure, un correcteur de linéarité qui est placé en série avec le déviateur Ly. Ce correcteur est représenté sur les figures 4 et 5 du document cité intitulé "Drive circuits for 45 AX", qui fournit en outre un schéma de réalisation du générateur Vm, que l'homme du métier saura facilement adapter pour obtenir la polarité et l'amplitude voulues.

D'autres variantes du montage sont possibles sans sortir du cadre de l'invention. Par exemple, le condensateur C1 de la figure 4 peut être monté en parallèle sur la diode D1 à condition de lui donner une valeur différente appropriée, le transistor Tr peut être remplacé par tout autre élément interrupteur, par exemple : un thyristor associé à son système de blocage connu, les polarités des semi-conducteurs et de l'alimentation peuvent être inversées. En outre on a mentionné plus haut que l'inductance d'arrêt Lc est "reliée" au condensateur auxiliaire Ce : toute liaison en courant continu qui permet d'imposer aux bornes du condensateur Ce une tension moyenne égale à $V_m$ peut convenir. En d'autres termes ladite liaison n'est pas obligatoirement directe : en particulier l'inductance Lc peut être connectée au point 6 des figures 3 et 4, au lieu du point 1. Elle est alors toujours "reliée" en courant continu au condensateur Ce, via l'inductance Le.

**Revendications**

1. Circuit de balayage de ligne pour un tube de visualisation d'image à déviation magnétique de faisceau, muni d'un assemblage fait d'une inductance de déviation (Ly) en série avec un condensateur (Cy) de S, et muni de moyens commutateurs qui sont constitués par un commutateur proprement dit (Tr) en parallèle avec deux diodes en série (D1, D2) connectées pour un sens de courant opposé à celui du commutateur, moyens qui sont connectés aux bornes d'une source de tension (V) via un enroulement (Tℓ) dit "primaire" d'un transformateur dit "de lignes", ledit assemblage (Ly, Cy) étant connecté d'une part au point commun des moyens commutateurs et de l'enroulement du transformateur et d'autre part au point commun des deux diodes en série, les moyens commutateurs étant conducteurs pendant une partie de la période de ligne dit temps d'aller pour appliquer à l'assemblage (Ly, Cy) une tension pratiquement constante et étant bloqués pendant le reste de la période dit temps de retour durant lequel l'inductance de déviation (Ly) forme un circuit résonant avec un condensateur de retour (C1) placé en parallèle sur les moyens commutateurs, le circuit étant également muni d'un générateur de tension (4) en forme de paraboles à fréquence de trame, caractérisé en ce qu'une inductance auxiliaire (Le) est insérée entre ledit assemblage et le point commun aux deux diodes, un second condensateur (Ce) de S est placé de façon à former une maille avec la seconde diode et l'inductance auxiliaire, et la tension du générateur de tension en forme de paraboles à fréquence de trame est appliquée au second condensateur de S (Ce).

2. Circuit de balayage selon la revendication 1, caractérisé en ce qu'il est muni d'un second condensateur de retour (C2) connecté de manière à constituer un circuit oscillant avec l'inductance auxiliaire.

3. Circuit de balayage de ligne pour un tube de visualisation d'image à déviation magnétique de faisceau, muni d'un assemblage fait d'une inductance de déviation (Ly) en série avec un condensateur (Cy) de S, et muni de moyens commutateurs faits d'un commutateur proprement dit (Tr) en parallèle avec une diode (D1) connectée pour un sens de courant opposé à celui du commutateur, moyens qui sont connectés aux bornes d'une source de tension (V) via un enroulement (Tℓ) dit "primaire" d'un transformateur dit "de lignes", ledit assemblage (Ly, Cy) étant connecté aux bornes d'un autre enroulement (5) du transformateur de lignes, les moyens commutateurs étant conducteurs pendant une partie de la période de ligne dite temps d'aller pour appliquer audit enroulement primaire une tension pratiquement constante et étant bloqués pendant le reste de la période dit temps de retour durant lequel l'inductance de déviation (Ly) forme un circuit résonant avec un condensateur de retour (C1) placée en parallèle sur les moyens commutateurs, caractérisé en ce qu'un second condensateur (Ce) de S est branché en série avec le premier et une source de courant en dents de scie (Le, C2, D2, Ta) est branchée aux bornes de ce second condensateur de S (Ce) pour y injecter un courant en dents de scie à fréquence de ligne, dont une partie traverse l'inductance de déviation (Ly), et le circuit est également muni d'un générateur de tension (4) en forme de paraboles à fréquence de trame dont la tension est appliquée au second condensateur de S (Ce).

4. Circuit de balayage, selon la revendication 3, caractérise en ce que la source de courant en dents de scie comprend une inductance auxiliaire (Le) connectée en série avec un ensemble fait d'un élément interrupteur (Ta), qui est commandé par un signal en créneaux à fréquence de ligne, en parallèle avec une diode (D2) et un condensateur (C2).

**Claims**

1. A line deflection circuit for a picture display tube using magnetic beam deflection, provided with an arrangement including a deflection inductance (Ly) in series with an S capacitor (Cy), and switching means constituted by a switch (Tr) arranged in parallel with two series-arranged diodes (D1, D2) which are connected in a current direction opposed to that of the switch, which means are connected to the terminals of a voltage source (V) *via* a "primary' winding (T) of a "line" transformer, said assembly (Ly, Cy) being connected to a common point of the switching means and the transformer winding and to the common point of the two series-arranged diodes, the switching means being conducting during a part of the line period referred to as trace time for applying a substantially constant voltage to the assembly (Ly, Cy) and being cut off during the rest of the period referred to as retrace time during which the deflection inductance (Ly) forms a resonant circuit with a retrace capacitor (C1) arranged parallel across the switching means, the circuit being also provided with a generator (4) for producing a voltage in the form of field frequency parabolas, characterized in that an auxiliary inductance (Le) is arranged between said assembly and the common point of the two diodes, a second S capacitor (Ce) is arranged to form a loop with the second diode and the auxiliary inductance, and the voltage of the generator producing a voltage in the form of field frequency parabolas is applied to the second S capacitor (Ce).

2. A deflection circuit as claimed in Claim 1, characterized in that it is provided with a second retrace capacitor (C2) for constituting a tuned circuit with the auxiliary inductance.

3. A line deflection circuit for a picture display tube using magnetic beam deflection, provided with an arrangement including a deflection inductance (Ly) in series with an S capacitor (Cy), and switching means constituted by a switch (Tr) arranged in parallel with a diode (D1) which is connected in a current direction opposed to that of the switch, which means are connected to the terminals of a voltage source (V) *via* a "primary" winding (T) of a "line" transformer, said assembly (Ly, Cy) being connected to the terminals of a further winding (5) of the line transformer, the switching means being conducting during a part of the line period referred to as trace time for applying a substantially constant voltage to said winding and being cut off during the rest of the period referred to as retrace time during which the deflection inductance (Ly) forms a resonant circuit with a retrace capacitor (C1) arranged parallel across the switching means, characterized in that a second S capacitor (Ce) is arranged in series with the first capacitor and a sawtooth current source (Le, C2, D2, Ta) is connected to the terminals of said second S capacitor (Ce) to which a line frequency sawtooth current, a part of which flows through the deflection inductance (Ly), is applied, and the circuit is also provided with a generator (4) for producing a voltage in the form of field frequency parabolas, which voltage is applied to the second S capacitor (Ce).

4. A deflection circuit as claimed in Claim 3, characterized in that the sawtooth current source comprises an auxiliary inductance (Le) arranged in series with a group comprising a switching element (Ta), which is controlled by a line frequency square-wave signal, in parallel with a diode (D2) and a capacitor (C2).

**Patentansprüche**

1. Zeilenabtastschaltung für eine Bildwiedergaberöhre mit magnetischer Strahlablenkung, mit einer Reihenschaltung aus einer Ablenkspule (Ly) und einem S-Kondensator (Cy), sowie mit Schaltmitteln, die durch einen genannten Schalter (Tr) parallel zu zwei in Reihe geschalteten Dioden (D1, D2) gebildet werden, die derart geschaltet sind, daß eine Stromrichtung erhalten wird, die der des Schalters entgegengesetzt ist, wobei diese Mittel über eine Wicklung eines als "Zeilentransformator" bezeichneten Transformators (T$L$) mit den Klemmen einer Spannungsquelle (V) verbunden sind, wobei diese Reihenschaltung (Ly, Cy) einerseits mit einem gemeinsamen Punkt der Schaltmittel und der Transformatorspule und andererseits mit einem gemeinsamen Punkt der beiden reihengeschalteten Dioden verbunden ist, wobei die Schaltmittel während eines als Hinlaufzeit bezeichneten Teils der Zeilenperiode leitend sind zum Zuführen einer nahezu konstanten Spannung zu der Reihenschaltung (Ly, Cy), und die während des als Rücklaufzeit bezeichneten restlichen Teils der Periode, in dem die Ablenkspule (Ly) mit einem zu den Schaltmitteln parallelgeschalteten Rücklaufkondensator (C1) einen Resonanzkreis bildet, gesperrt sind, und wobei die Schaltungsanordnung ebenfalls mit einem Spannungsgenerator (4) für eine parabelförmige Spannung mit der Teilbildfrequenz versehen ist, dadurch gekennzeichnet, daß zwischen der genannten Schaltungsanordnung und dem gemeinsamen Punkt der zwei Dioden eine Hilfsspule (Le) vorgesehen ist, wobei ein zweiter "S"-Kondensator (Ce) derart angeordnet ist, daß mit der zweiten Diode und der Hilfsspule eine Schleife gebildet wird, und dal die parabelförmige Spannung des Spannungsgenerators mit der Teilbildfrequenz einem zweiten "S"-Kondensator (Ce) zugeführt wird.

2. Abtastschaltung nach Anspruch 1, dadurch gekennzeichnet, daß sie mit einem zweiten Rücklaufkondensator (C2) versehen ist, der derart vorgesehen ist, daß mit der Hilfsspule ein Schwingkreis gebildet wird.

3. Zeilenabtastschaltung für eine Bildwiedergaberöhre mit magnetischer Strahlablenkung, mit einer Reihenschaltung aus einer Ablenkspule (Ly) und einem S-Kondensator (Cy), sowie mit Schaltmitteln, die durch einen genannten Schalter (Tr) parallel zu einer Diode (D1) gebildet werden, die derart geschaltet ist, daß eine Stromrichtung erhalten wird, die der des Schalters entgegengesetzt ist, wobei diese Mittel über eine als "Primärwicklung" (T$L$) bezeichnete Wicklung eines als "Zeilentransformator" bezeichneten Transformators mit den Klemmen einer Spannungsquelle (V) verbunden sind, wobei diese Reihenschaltung (Ly, Cy) mit den Klemmen einer anderen Wicklung (5) des Zeilentransformators verbunden ist, wobei die Schaltmittel während eines als Hinlaufzeit bezeichneten Teils der Zeilenperiode leitend sind zum Zuführen einer nahezu konstanten Spannung zu der Primärwicklung, und die während des als Rücklaufzeit bezeichneten restlichen Teils der Periode, in dem die Ablenkspule (Ly) mit einem zu den Schaltmitteln parallelgeschalteten Rücklaufkondensator (C1) einen Resonanzkreis bildet, gesperrt sind, dadurch gekennzeichnet, daß ein zweiter "S"-Kondensator (Ce) in Reihe mit dem ersten geschaltet ist und daß eine Sagezahnstromquelle (Le, C2, D2, Ta) mit den Klemmen dieses zweiten "S"-Kondensators (Ce) verbunden ist um darin einen Sägezahnstrom mit der Zeilenfrequenz einzuspeisen, von dem ein Teil durch die Ablenkspule (Ly) geht, und wobei die Schaltungsanordnung ebenfalls mit einem Spannungsgenerator (4) für eine parabelförmige Spannung mit der Teilbildfrequenz versehen ist, wobei deren Spannung dem zweiten "S"-Kondensator (Ce) zugeführt wird.

4. Abtastschaltung nach Anspruch 3, dadurch gekennzeichnet, daß die Sägezahnstromquelle eine Hilfsspule (Le) aufweist, die mit einer aus einem Schaltelement (Ta) bestehenden Schaltungsanordnung in Reihe geschaltet ist, wobei dieses Schaltelement mittels eines Rechtecksignals mit der Zeilenfrequenz gesteuert wird und mit einer Diode (D2) und einem Kondensator (C2) parallelgeschaltet ist.

EP 0 258 949 B1

FIG1A

FIG.1B

FIG.1C

FIG.2A

FIG.2B

FIG.3

FIG.4

9